# FASCICULE DE BREVET EUROPEEN

(11) **EP 2 461 762 B1**
(45) Date de publication et mention de la délivrance du brevet: **12.08.2015**
(21) Numéro de dépôt: 10745429.0
(22) Date de dépôt: 30.07.2010
(51) Int. Cl.: A61C 1/18, A61C 1/08

(54) **PIECE A MAIN A MOYENS DE CONNEXION ELECTRIQUE**
HANDSTÜCK MIT EINER ELEKTRISCHEN ANSCHLUSSVORRICHTUNG
HANDPIECE HAVING AN ELECTRICAL CONNECTION MEANS

(30) Priorité: 07.08.2009 FR 0955590
(43) Date de publication de la demande: 13.06.2012
(73) Titulaire: ANTHOGYR, 74700 Sallanches (FR)
(72) Inventeur: LANCIEUX, Cédric, F-26120 Chabeuil (FR); RICHARD, Hervé, F-73590 Notre Dame De Bellecombe (FR)
(74) Mandataire: Poncet, Jean-François
(86) Numéro de dépôt international: PCT/IB2010/053478
(87) Numéro de publication internationale: WO 2011/015980

(56) Documents cités:
- EP-A1- 0 181 669
- EP-A1- 0 197 591
- FR-A1- 2 445 134
- FR-A1- 2 579 448
- FR-A1- 2 592 299
- FR-A1- 2 709 658
- US-A- 4 521 189

## Description

### DOMAINE TECHNIQUE DE L'INVENTION

La présente invention concerne le domaine des pièces à main chirurgicales, et concerne plus particulièrement une pièce à main dentaire.

Lors d'une opération en bouche d'un patient, il est important que le praticien ait une bonne vision de ce qu'il fait. Pour ce faire, on connaît des pièces à main dentaires à moyens électriques d'éclairage de la zone de travail. Dans la réalisation courante, la pièce à main comprend :
- une tête apte à entraîner un outil,
- un corps à tronçon proximal s'étendant selon une direction longitudinale et destiné à être raccordé selon une face proximale d'extrémité à une face distale d'un moteur d'entraînement,
- des moyens d'indexation sous forme d'un ergot saillant, adaptés pour bloquer en une position angulaire définie le corps de pièce à main dentaire autour de la direction longitudinale par rapport au moteur d'entraînement,
- des moyens électriques d'éclairage de la zone de travail,
- des moyens de transfert d'énergie électrique pour transférer l'énergie électrique depuis la face proximale d'extrémité jusqu'aux moyens électriques d'éclairage, comprenant des moyens de connexion électrique.

Les moyens électriques d'éclairage, portés par la pièce à main, éclairent la zone de travail de l'outil et sont alimentés en énergie électrique par des moyens d'amenée d'énergie électrique traversant axialement le moteur d'entraînement auxquels sont connectés les moyens de transfert d'énergie électrique dans la pièce à main dentaire lorsque la face proximale d'extrémité de la pièce à main dentaire est raccordée à la face distale du moteur d'entraînement.

Comme décrit dans le document FR 2 673 369, les moyens de connexion sont saillants et dépassent au-delà de la face d'extrémité proximale d'extrémité du corps de pièce à main.

Afin de pouvoir achever les opérations commencées en bouche du patient lorsque le moteur d'entraînement tombe en panne, les praticiens conservent généralement leur ancien moteur d'entraînement ou un moteur d'entraînement moins onéreux. De tels moteurs sont le plus souvent dépourvus de moyens d'amenée d'énergie électrique sur leur face distale. Ces moteurs d'entraînement sont couramment appelés moteurs « non lumière ».

La présence des moyens d'indexation et de moyens de connexion électrique dépassant sur la face proximale d'extrémité de la pièce à main empêche cependant le raccordement de la pièce à main dentaire à la face distale d'un moteur d'entraînement «non lumière».

Le praticien est alors obligé d'utiliser une pièce à main dentaire différente, compatible avec le moteur «non lumière».

Lorsque le moteur «non lumière» de dépannage est l'ancien moteur d'entraînement qu'utilisait le praticien, celui-ci doit alors conserver précieusement la pièce à main dentaire correspondante afin de la réutiliser en cas de panne du moteur d'entraînement de la pièce à main dentaire à moyens d'éclairage. Et le praticien doit alors utiliser des outils différents auxquels il n'est plus habitué et qui peuvent ne pas convenir pour les opérations en cours dans la bouche du patient.

Le document EP 0 181 669 décrit une pièce à main dentaire constituée d'une tête et d'un corps séparables. Des fiches de sortie de connexion électrique font en permanence saillie sur la face proximale d'extrémité du corps et empêchent le raccordement de la pièce à main dentaire à la face distale d'un moteur d'entraînement « non lumière ».

Les documents FR 2 579 448 et EP 0 197 591 décrivent chacun une pièce à main dentaire munie, sur la face proximale d'extrémité de son corps, de pistes annulaires qui évitent d'avoir recours à des moyens d'indexation entre la pièce à main dentaire et le moteur d'entraînement.

### EXPOSE DE L'INVENTION

Un problème proposé par l'invention est de concevoir une pièce à main dentaire à moyens d'éclairage qui puisse être raccordée pour son entraînement à un moteur «non lumière».

Pour atteindre ce but ainsi que d'autres, l'invention propose une pièce à main dentaire comprenant :
- une tête apte à entraîner un outil,
- un corps à tronçon proximal s'étendant selon une direction longitudinale et destiné à être raccordé selon une face proximale d'extrémité à une face distale d'un moteur d'entraînement,
- des moyens d'indexation, adaptés pour bloquer en une position angulaire définie le corps de pièce à main dentaire autour de la direction longitudinale par rapport au moteur d'entraînement,
- des moyens électriques d'éclairage de la zone de travail de l'outil,
- des moyens de transfert d'énergie électrique pour transférer l'énergie électrique depuis la face proximale d'extrémité jusqu'aux moyens électriques d'éclairage, comprenant des moyens de connexion électrique,
   dans laquelle :
- les moyens d'indexation sont rétractables ou en retrait par rapport à la face proximale d'extrémité,
- les moyens de connexion électrique, comportant au moins une borne de contact, sont déplaçables selon la direction longitudinale entre une position de retrait dans laquelle les moyens de connexion électrique ne dépassent pas axialement selon la direction longitudinale au-delà de la face proximale d'extrémité du corps, et une position de connexion dans laquelle les moyens de connexion électrique dépassent axialement selon la direction longitudinale au-delà de la face proximale d'extrémité du corps,
- des premiers moyens élastiques rappellent en permanence les moyens de connexion électrique en position de connexion.

La face distale d'un moteur d'entraînement «non lumière» peut ainsi recevoir la face proximale d'extrémité de la pièce à main dentaire pour son raccordement, sans que les moyens d'indexation et/ou les moyens de connexion électrique s'opposent au rapprochement relatif axial de la pièce à main dentaire et du moteur d'entraînement. Les moyens de connexion électrique, ainsi que les moyens d'indexation, lorsqu'ils sont rétractables, sont en effet repoussés dans le tronçon proximal du corps de la pièce à main dentaire lors du raccordement au moteur d'entraînement «non lumière» dont la face distale ne comporte aucun élément destiné à coopérer avec les moyens d'indexation et les moyens de connexion électrique.

Et lorsque la pièce à main dentaire est utilisée avec un moteur d'entraînement muni de moyens d'amenée d'énergie électrique aptes à coopérer avec les moyens de transfert d'énergie électrique de la pièce à main, les moyens d'indexation et les moyens de connexion électrique de la pièce à main dentaire viennent coopérer avec la face distale du moteur d'entraînement sans que l'utilisateur n'ait à effectuer de manipulation autre que celle de raccorder la face proximale d'extrémité de la pièce à main dentaire à la face distale du moteur d'entraînement.

Dans un premier mode de réalisation, on peut prévoir que :
- les moyens d'indexation comprennent un ergot d'indexation rétractable porté par la pièce à main, déplaçable selon la direction longitudinale entre une position d'indexation, dans laquelle l'ergot d'indexation dépasse axialement selon la direction longitudinale au-delà de la face proximale d'extrémité, et une position de retrait, dans laquelle l'ergot d'indexation ne dépasse pas axialement selon la direction longitudinale au-delà de la face proximale d'extrémité,
- des seconds moyens élastiques rappellent en permanence l'ergot d'indexation en position d'indexation,
- l'ergot d'indexation est destiné à coopérer avec une cavité d'indexation portée par la face distale du moteur d'entraînement.

Dans un second mode de réalisation, on peut prévoir que :
- les moyens d'indexation comprennent une cavité d'indexation portée par la face proximale d'extrémité du corps de pièce à main dentaire,
- la cavité d'indexation est destiné à coopérer avec un ergot d'indexation rétractable, porté par la face distale du moteur d'entraînement, déplaçable selon la direction longitudinale entre une position d'indexation dans laquelle l'ergot d'indexation dépasse axialement selon la direction longitudinale au-delà de la face distale du moteur d'entraînement, et une position de retrait dans laquelle l'ergot d'indexation ne dépasse pas axialement selon la direction longitudinale au-delà de la face distale du moteur d'entraînement,
- des seconds moyens élastiques rappellent en permanence l'ergot d'indexation en position d'indexation.

Dans ces deux modes de réalisation, l'ergot d'indexation et la cavité d'indexation correspondante permettent de bloquer le corps de pièce à main dentaire en une position angulaire définie autour de la direction longitudinale par rapport au moteur d'entraînement, et ce afin de positionner convenablement en correspondance les moyens de transfert d'énergie électrique de la pièce à main dentaire et les moyens d'amenée d'énergie électrique du moteur d'entraînement.

Dans une première variante du premier mode de réalisation, on peut prévoir que l'ergot d'indexation et les moyens de connexion électrique ont :
- des positions radiales respectives distinctes à l'écart de l'axe longitudinal du tronçon proximal du corps de pièce à main,
   et/ou
- des sections transversales de formes respectives distinctes,
   et/ou
- des sections transversales avec une ou des dimensions respectives distinctes, et/ou
- des orientations respectives relatives distinctes autour de la direction longitudinale,
choisies de telle sorte que les moyens de connexion électrique ne peuvent pas pénétrer dans la cavité d'indexation portée par la face distale du moteur d'entraînement lorsque la pièce à main et le moteur d'entraînement sont coaxiaux.

On évite ainsi que les moyens de connexion électrique ne parasitent l'indexation de la pièce à main dentaire par rapport au moteur d'entraînement autour de la direction longitudinale. En effet, dès lors que les moyens de connexion électrique ne peuvent pas pénétrer dans la cavité d'indexation portée par la face distale du moteur d'entraînement, seul l'ergot d'indexation peut pénétrer dans la cavité d'indexation et déterminer de façon fiable et sûre la position relative de la pièce à main dentaire et du moteur d'entraînement autour de la direction longitudinale.

Selon une seconde variante du premier mode de réalisation, on peut prévoir que :
- les moyens de connexion électrique peuvent pénétrer dans la cavité d'indexation portée par la face distale du moteur d'entraînement lorsque la pièce à main dentaire et le moteur d'entraînement sont coaxiaux,
- les moyens de connexion électrique comportent des moyens d'échappement conformés de telle sorte que, lorsque les moyens de connexion électrique ont pénétré dans la cavité d'indexation au lieu et à la place de l'ergot d'indexation, les moyens de connexion électrique peuvent ressortir de la cavité d'indexation lorsque le corps de pièce à main dentaire est déplacé par rapport au moteur d'entraînement selon un mouvement de rotation autour de la direction longitudinale.

Les moyens de connexion électrique ne bloquent ainsi pas la rotation relative du corps de pièce à main dentaire par rapport au moteur d'entraînement selon la direction longitudinale. L'indexation se fera donc bien par l'ergot d'indexation lorsque celui-ci pénétrera dans la cavité d'indexation.

En outre, l'échappement des moyens de connexion électrique hors de la cavité d'indexation ne perturbe pas le praticien dans sa gestuelle habituelle pour le raccordement et l'indexation de la pièce à main dentaire et du moteur d'entraînement.

Avantageusement, on peut prévoir que :
- les moyens de connexion électrique comportent un corps de connexion à face d'extrémité portant ladite au moins une borne de contact,
- les moyens d'échappement comprennent au moins une rampe qui s'étend le long d'une direction sensiblement perpendiculaire à la direction longitudinale et sensiblement perpendiculaire à une direction radiale,
- lorsque le corps de connexion est en position de connexion, la rampe relie la face d'extrémité du corps de connexion à la face proximale d'extrémité du corps de pièce à main.

De préférence, les moyens d'échappement peuvent comprendre deux rampes s'étendant l'une à l'écart de l'autre le long de la direction sensiblement perpendiculaire à la direction longitudinale et sensiblement perpendiculaire à une direction radiale.

On permet ainsi un échappement des moyens de connexion électrique hors de la cavité d'indexation, lorsque ceux-ci y ont accidentellement pénétré, de façon simple et aisée par un mouvement de rotation autour de la direction longitudinale dans n'importe lequel des deux sens de rotation possibles.

Avantageusement, la ou les rampes peuvent présenter un profil transversal sensiblement en arc de cercle ou en ligne droite oblique.

De préférence, les premiers moyens élastiques peuvent exercer une force de rappel inférieure à la force de rappel exercée par les seconds moyens élastiques.

On assure ainsi une prédominance des moyens d'indexation lors du raccordement de la pièce à main dentaire au moteur d'entraînement. En effet, l'effort de l'utilisateur pour raccorder la pièce à main dentaire au moteur d'entraînement, en cas de défaut d'indexation de l'un par rapport à l'autre, s'exercera de façon prépondérante à l'encontre des seconds moyens élastiques rappelant l'ergot d'indexation en position d'indexation.

Avantageusement, le corps de connexion peut comporter une section transversale de forme non circulaire. On évite ainsi tout risque de rotation de celui-ci qui pourrait conduire à une inversion des polarités de l'énergie électrique.

Avantageusement, afin d'améliorer le contact électrique entre la pièce à main dentaire et le moteur d'entraînement, on peut prévoir que :
- ladite au moins une borne de contact portée sur la face d'extrémité du corps de connexion est déplaçable selon la direction longitudinale entre une première position et une seconde position,
- en seconde position, la borne de contact dépasse au-delà de la face d'extrémité du corps de connexion selon un dépassement plus important qu'en première position,
- des troisièmes moyens élastiques rappellent en permanence ladite au moins une borne de contact en seconde position.

Selon un autre aspect, l'invention vise à permettre le raccordement d'une pièce à main dentaire à moyens électriques d'éclairage sur un moteur d'entraînement possédant, sur sa face distale, une ampoule à incandescence.

On permet ainsi au praticien de réutiliser un ancien moteur à ampoule à incandescence pour se dépanner ou pour changer de pièce à main.

Pour atteindre ce but, ainsi que d'autres, l'invention propose un kit d'adaptation comportant une pièce à main dentaire telle que définie ci-dessus, et comportant un dispositif de raccordement compatible électriquement, mécaniquement et géométriquement pour se substituer à une ampoule à incandescence portée par le moteur d'entraînement, en vue de prélever les courant et tension d'alimentation prévus pour ladite ampoule à incandescence afin de les conduire aux moyens de connexion électrique de ladite pièce à main.

Dans le kit d'adaptation selon l'invention, on pourra utiliser un dispositif de raccordement tel que ceux décrits dans le document FR 2 673 369.

De préférence, on peut prévoir que :
- le dispositif de raccordement présente au moins une borne d'alimentation destinée à venir en contact avec ladite au moins une borne de contact des moyens de connexion électrique,
- ladite au moins une borne d'alimentation du dispositif de raccordement est située sensiblement au creux d'une face d'extrémité concave du dispositif de raccordement.

La face d'extrémité concave du dispositif de raccordement permet de guider la borne de contact des moyens de connexion électrique vers la borne d'alimentation, et ce afin de faciliter leur venue et maintien en correspondance.

Avantageusement, on peut prévoir que le dispositif de raccordement comporte au moins un fusible de protection contre les surtensions ou surintensités. On protège ainsi le praticien et le patient de tout défaut électrique de la pièce à main et de tout défaut électrique du moteur d'entraînement.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :
- les figures 1 et 2 sont des vues en coupe de la deuxième variante d'un premier mode de réalisation de pièce à main dentaire selon l'invention ;
- la figure 3 est une vue de détails de la figure 1 ;
- la figure 4 est une vue en perspective illustrant le raccordement de la pièce à main dentaire des figures 1 à 3 à un moteur d'entraînement ;
- la figure 5 est une vue en coupe de la pièce à main dentaire des figures 1 à 4 raccordée à un moteur d'entraînement ;
- la figure 6 est une vue en perspective des moyens de connexion électrique de la pièce à main dentaire des figures 1 à 5 ;
- les figures 7 et 8 sont des vues de côté des moyens de connexion électrique de la figure 6 ;
- les figures 9 à 12 sont des vues schématiques de la face proximale d'extrémité de pièce à main dentaire et de la face distale d'un moteur d'entraînement dans une première variante du premier mode de réalisation de pièce à main dentaire selon l'invention ;
- la figure 13 est une vue en coupe partielle d'un moteur d'entraînement à ampoule à incandescence ;
- la figure 14 est une vue en perspective d'un moteur d'entraînement à ampoule à incandescence auquel vient se substituer un dispositif de raccordement d'un kit d'adaptation selon l'invention ;
- les figures 15 et 16 sont des vues en perspective d'un premier type de dispositif de raccordement ;
- la figure 17 est une vue de côté du dispositif de raccordement des figures 15 et 16;
- la figure 18 est une vue en perspective d'un second type de dispositif de raccordement ; et
- la figure 19 est un exemple de circuit de traitement de signal électrique qui peut être utilisé dans une pièce à main dentaire selon l'invention.

### DESCRIPTION DES MODES DE REALISATION PREFERES

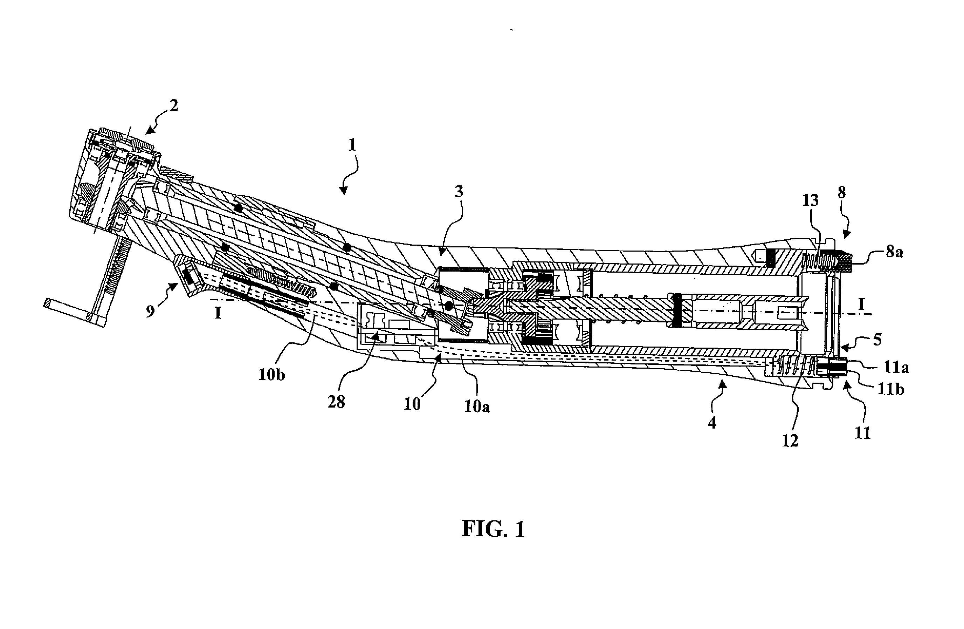

Sur les figures 1 à 5 est représentée une pièce à main dentaire selon une seconde variante d'un premier mode de réalisation de l'invention.

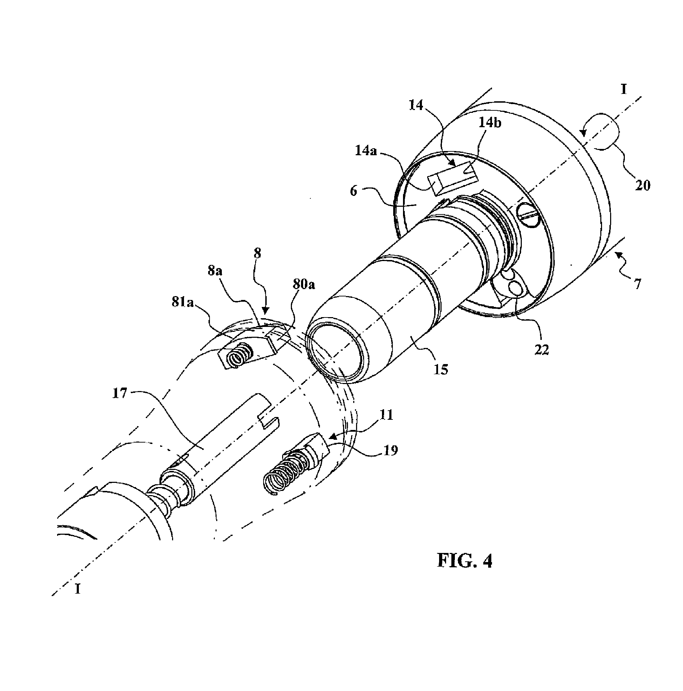

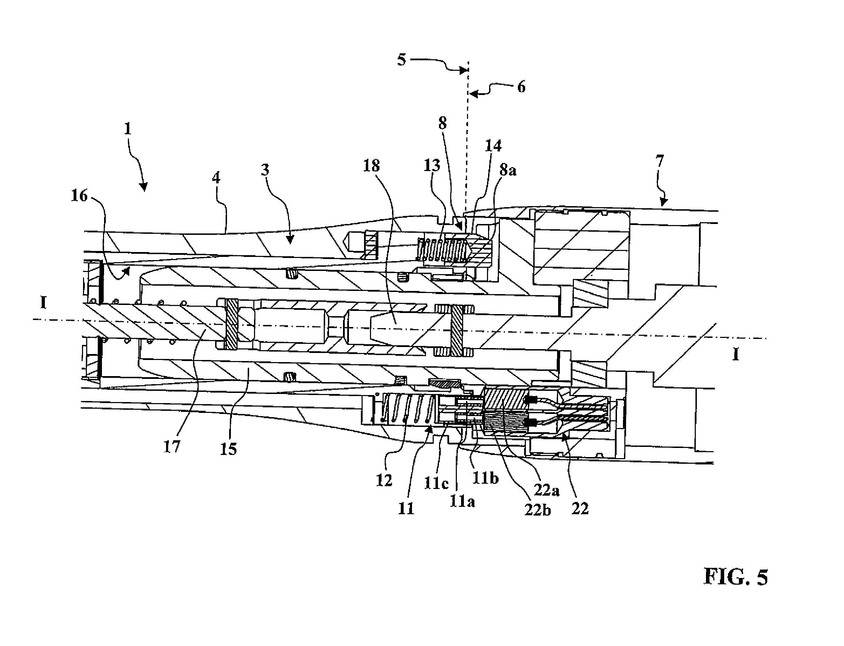

Sur ces figures, la pièce à main dentaire 1 comprend :
- une tête 2 apte à entraîner un outil (non représenté),
- un corps 3 à tronçon proximal 4 s'étendant selon une direction longitudinale I-I et destiné à être raccordé selon une face proximale d'extrémité 5 à une face distale 6 d'un moteur d'entraînement 7 (figures 4 et 5),
- des moyens d'indexation 8, adaptés pour bloquer en une position angulaire définie le corps 3 de la pièce à main dentaire 1 autour de la direction longitudinale I-I par rapport au moteur d'entraînement 7,
- des moyens électriques d'éclairage 9 de la zone de travail de l'outil,
- des moyens de transfert 10 d'énergie électrique pour transférer l'énergie électrique depuis la face proximale d'extrémité jusqu'aux moyens électriques d'éclairage 9.

Les moyens d'indexation 8 sont rétractables par rapport à la face proximale d'extrémité 5.

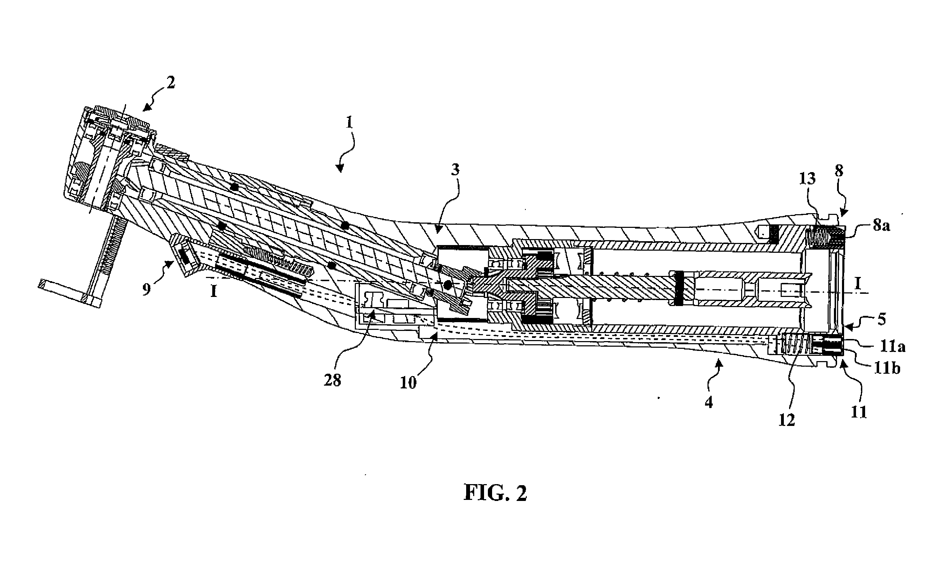

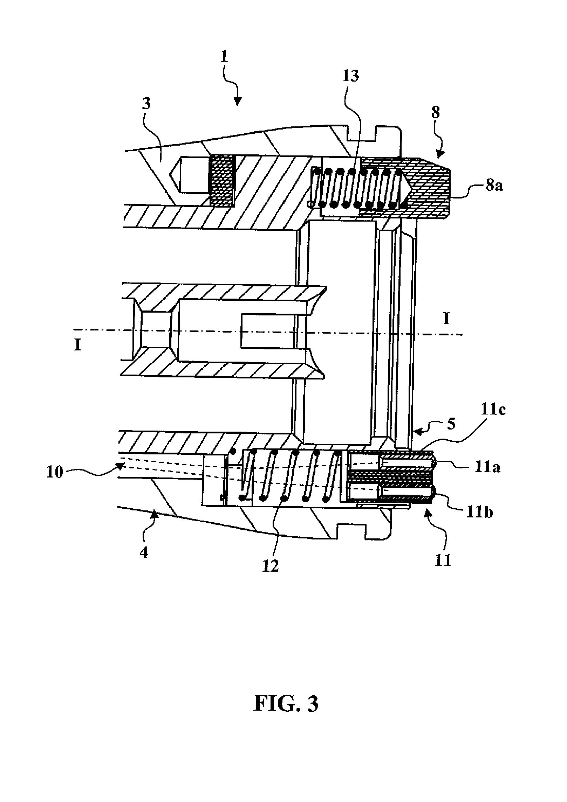

Plus particulièrement, les moyens d'indexation 8 comprennent un ergot d'indexation 8a rétractable porté par la pièce à main dentaire 1, déplaçable selon la direction longitudinale I-I entre une position d'indexation (figures 1 et 3), dans laquelle l'ergot d'indexation 8a dépasse axialement selon la direction longitudinale I-I au delà de la face proximale d'extrémité 5, et une position de retrait (figure 2), dans laquelle l'ergot d'indexation 8a ne dépasse pas axialement selon la direction longitudinale I-I au delà de la face proximale d'extrémité 5. Les moyens d'indexation 8 sont ainsi rétractables dans le tronçon proximal 4 de la pièce à main dentaire 1.

Les moyens de transfert 10 d'énergie électrique comprennent des moyens de connexion électrique 11, comportant deux bornes de contact 11a et 11 b, déplaçables selon la direction longitudinale I-I entre une position de retrait (figure 2) dans laquelle les moyens de connexion électrique 11 ne dépassent pas axialement selon la direction longitudinale I-I au-delà de la face proximale d'extrémité 5 du corps 3, et une position de connexion (figures 1 et 3) dans laquelle les moyens de connexion électrique 11 dépassent axialement selon la direction longitudinale I-I au-delà de la face proximale d'extrémité 5 du corps 3.

Des premiers moyens élastiques 12 rappellent en permanence les moyens de connexion électrique 11 en position de connexion, tandis que des seconds moyens élastiques 13 rappellent en permanence les moyens d'indexation 8 en position d'indexation.

La connexion de la pièce à main dentaire 1 des figures 1 à 3 à un moteur d'entraînement 7 est illustrée sur les figures 4 et 5. Le moteur d'entraînement 7 comporte une cavité d'indexation 14 portée par la face distale 6, et destinée à coopérer avec l'ergot d'indexation 8a pour positionner le corps 3 de pièce à main dentaire 1 en une position angulaire prédéterminée autour de la direction longitudinale I-I par rapport au moteur d'entraînement 7.

Pour ce faire, la cavité d'indexation 14 comporte deux facettes latérales 14a et 14b perpendiculaires à la face distale 6 (elle-même perpendiculaire à la direction longitudinale I-I). L'ergot d'indexation 8a comporte quant à lui deux facettes latérales 80a et 81a perpendiculaires à la face proximale d'extrémité 5, destinées à venir porter en appui contre les facettes latérales 14a et 14b lorsque l'ergot d'indexation 8a est engagé à faible jeu dans la cavité d'indexation 14 (figure 5).

Dans un second mode de réalisation de pièce à main dentaire selon l'invention, non représenté sur les figures, mais que l'on peut comprendre en considérant les mêmes figures 1 à 5, on fait porter la cavité d'indexation 14 par la face proximale d'extrémité 5 du corps 3 de pièce à main dentaire 1 et on fait porter l'ergot d'indexation 8a par le moteur d'entraînement 7. L'ergot d'indexation 8a est alors déplaçable selon la direction longitudinale I-I entre une position d'indexation dans laquelle il dépasse axialement selon la direction longitudinale I-I au-delà de la face distale 6 du moteur d'entraînement 7, et une position de retrait dans laquelle il ne dépasse pas axialement selon la direction longitudinale I-I au-delà de la face distale 6 du moteur d'entraînement 7. Les seconds moyens élastiques 13 rappellent en permanence l'ergot d'indexation 8a en position d'indexation. La cavité d'indexation 14, portée par la face proximale d'extrémité 5 du corps 3 de pièce à main dentaire constitue des moyens d'indexation 8 qui sont en retrait par rapport à la face proximale d'extrémité 5.

Dans le second mode de réalisation de pièce à main dentaire 1 selon l'invention, les moyens de connexion électrique 11 sont identiques à ceux du premier mode de réalisation illustré sur les figures 1 à 5.

Dans le premier mode de réalisation, lorsque le praticien veut connecter la pièce à main dentaire 1 des figures 1 à 3 à un moteur d'entraînement dit «non lumière», c'est-à-dire avec une face distale parfaitement lisse et dépourvue de cavités, l'ergot d'indexation 8a et les moyens de connexion électrique 11 sont repoussés par la face distale du moteur d'entraînement dans le tronçon proximal 4 du corps 3. L'ergot d'indexation 8a et les moyens de connexion électrique 11 ne gênent ainsi pas le praticien lors du raccordement de la pièce à main dentaire 1 à un moteur d'entraînement «non lumière». Le praticien peut ainsi continuer d'utiliser sa pièce à main dentaire 1 à moyens électriques d'éclairage 9 ainsi que les outils correspondants avec lesquels il était en train de réaliser des opérations en bouche d'un patient avant que son moteur d'entraînement 7 (permettant l'alimentation des moyens d'éclairage 9) tombe en panne.

L'ergot d'indexation 8a et les moyens de connexion électrique 11 ne gênent pas non plus le praticien dans le cas d'une pièce à main dentaire 1 selon le second mode de réalisation : l'ergot d'indexation se rétracte dans le moteur d'entraînement ou pénètre dans la cavité d'indexation 14 de la pièce à main dentaire 1 tandis que les moyens de connexion électrique 11 sont repoussés en position de retrait par la face distale du moteur d'entraînement «non lumière».

Lorsque la pièce à main dentaire 1 selon le premier mode de réalisation de l'invention est raccordée au moteur d'entraînement 7, le praticien fait pénétrer un manchon mâle de centrage 15 porté par le moteur d'entraînement 7 dans une cavité femelle 16 du tronçon proximal 4 du corps 3. Le manchon mâle de centrage 15 est creux afin de permettre à un arbre de transmission 17 de la pièce à main dentaire 1 de venir se connecter à un arbre de transmission 18 du moteur d'entraînement 7 (figures 4 et 5). Lorsque l'ergot d'indexation 8a ne se trouve pas exactement en vis-à-vis de la cavité d'indexation 14, le praticien exerce un mouvement de rotation relative de la pièce à main dentaire 1 par rapport au moteur d'entraînement 7 autour de la direction longitudinale I-I (mouvement illustré par la flèche 20 sur la figure 4), jusqu'à ce que l'ergot d'indexation 8a vienne en face de la cavité d'indexation 14 et y pénètre en bloquant alors le mouvement de rotation relative. Lors de ce mouvement de rotation, les faces proximale d'extrémité 5 et distale 6 se trouvent en contact ou à proximité immédiate. Cette indexation permet d'amener les moyens de connexion électrique 11 en face des moyens d'amenée d'énergie électrique du moteur d'entraînement 7.

Lors de cette opération d'indexation, il ne faut pas que les moyens de connexion électrique 11, dépassant axialement selon la direction longitudinale I-I au-delà de la face proximale d'extrémité 5, risquent de pénétrer dans la cavité d'indexation 14, produisant alors une indexation incorrecte de la pièce à main dentaire 1 par rapport au moteur d'entraînement 7.

Pour ce faire, selon une première variante du premier mode de réalisation, on peut avantageusement faire en sorte que les moyens de connexion électrique 11 ne puissent pas pénétrer dans la cavité d'indexation 14 portée par la face distale 6 du moteur d'entraînement 7 lorsque la pièce à main dentaire 1 et le moteur d'entraînement 7 sont coaxiaux.

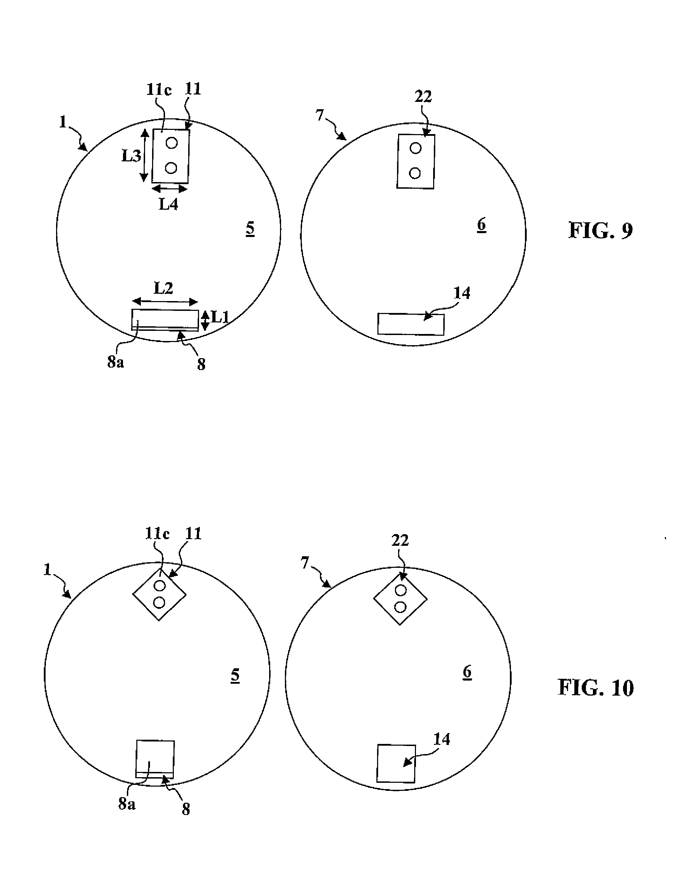

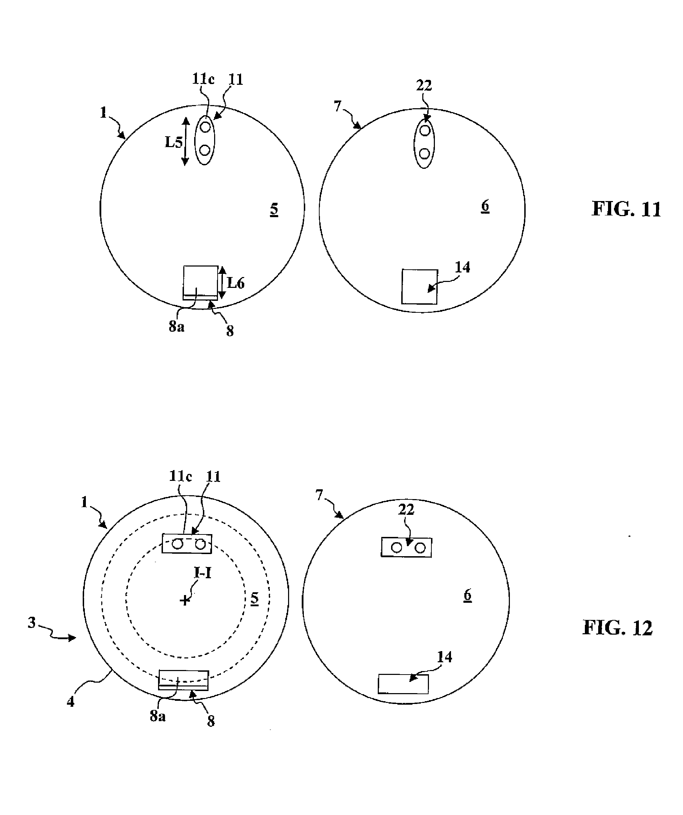

A cet effet, on peut prévoir que l'ergot d'indexation 8a et les moyens de connexion électrique 11 ont :
- des positions radiales respectives distinctes à l'écart de l'axe longitudinal du corps de pièce à main dentaire (figure 12), et/ou
- des sections transversales de formes respectives distinctes (figure 11), et/ou
- des sections transversales avec une ou des dimensions respectives distinctes (figure 9), et/ou
- des orientations respectives relatives distinctes (figure 10).

Les figures 9 à 12 sont des représentations schématiques de la face proximale d'extrémité 5 de la pièce à main dentaire 1 et de la face distale 6 du moteur d'entraînement 7 correspondant à ces différentes possibilités.

Sur la figure 9, l'ergot d'indexation 8a a une forme de section transversale de même type que les moyens de connexion électrique 11, à savoir une forme rectangulaire. Les dimensions (longueurs L1 et L2) de la section transversale de l'ergot d'indexation 8a diffèrent cependant des dimensions (longueurs L3 et L4) de la section transversale des moyens de connexion électrique 11, de sorte que les moyens de connexion électrique 11 ne peuvent pas pénétrer dans la cavité d'indexation 14 portée par la face distale 6 du moteur d'entraînement 7 lorsque la pièce à main dentaire 1 et le moteur d'entraînement 7 sont coaxiaux.

Sur la figure 10, l'ergot d'indexation 8a et les moyens de connexion électrique 11 ont des sections transversales de même type (carrées) et de mêmes dimensions. Cependant, les orientations respectives relatives des sections transversales de l'ergot d'indexation 8a et des moyens de connexion électrique 11 sont choisies de telle sorte que les moyens de connexion électrique 11 ne peuvent pas pénétrer dans la cavité d'indexation 14 portée par la face distale 6 du moteur d'entraînement 7 lorsque la pièce à main dentaire 1 et le moteur d'entraînement 7 sont coaxiaux.

Sur la figure 11, l'ergot d'indexation 8a présente une section transversale de forme carrée tandis que les moyens de connexion électrique 11 ont une section en forme d'ellipse. La forme en ellipse de la section transversale des moyens de connexion électrique 11 présente un grand axe de longueur L5 supérieure à la longueur L6 d'un côté de la section transversale de l'ergot d'indexation 8a. Les moyens de connexion électrique 11 ne peuvent ainsi pas pénétrer dans la cavité d'indexation 14 portée par la face distale 6 du moteur d'entraînement 7 lorsque la pièce à main dentaire 1 et le moteur d'entraînement 7 sont coaxiaux.

Sur la figure 12, l'ergot d'indexation 8a et les moyens de connexion électrique 11 ont des sections transversales de même forme (rectangulaires), de mêmes dimensions et de même orientation. Comme représenté avec les cercles concentriques en traits discontinus, l'ergot d'indexation 8a et les moyens de connexion électrique 11 occupent des positions radiales respectives distinctes à l'écart de l'axe longitudinal I-I du tronçon proximal 4 du corps 3 de la pièce à main dentaire 1. De la sorte, les moyens de connexion électrique 11 ne peuvent pas pénétrer dans la cavité d'indexation 14 portée par la face distale 6 du moteur d'entraînement 7 lorsque la pièce à main dentaire 1 et le moteur d'entraînement 7 sont coaxiaux.

Dans le cas de la seconde variante du premier mode de réalisation de l'invention, on voit plus particulièrement sur la figure 4 que les moyens de connexion électrique 11 peuvent pénétrer dans la cavité d'indexation 14 portée par la face distale 6 du moteur d'entraînement 7 lorsque la pièce à main dentaire 1 et le moteur d'entraînement 7 sont coaxiaux. En effet, l'ergot d'indexation 8a et les moyens de connexion électrique 11 ont des positions radiales à l'écart de l'axe longitudinal I-I diamétralement opposées et les moyens de connexion électrique 11 ont une section transversale de forme et de dimensions plus petites que celles de l'ergot d'indexation 8a.

Il est alors proposé, dans le but de ne pas perturber les opérations d'indexation par les moyens de connexion électrique 11, des moyens d'échappement 19. Les moyens d'échappement 19 sont des rampes conformées de telle sorte que, lorsque les moyens de connexion électrique 11 ont pénétré dans la cavité d'indexation 14 au lieu et à la place de l'ergot d'indexation 8a, les moyens de connexion électrique 11 sont repoussés axialement et peuvent ressortir de la cavité d'indexation 14 lorsque le corps 3 de pièce à main dentaire 1 est déplacé par rapport au moteur d'entraînement 7 selon un mouvement de rotation autour de la direction longitudinale I-I (illustré par la flèche 20). Les moyens d'échappement 19 agissent ainsi, pour l'échappement des moyens de connexion électrique hors de la cavité d'indexation 14, de façon compatible avec le mouvement opéré par le praticien lors de l'opération d'indexation.

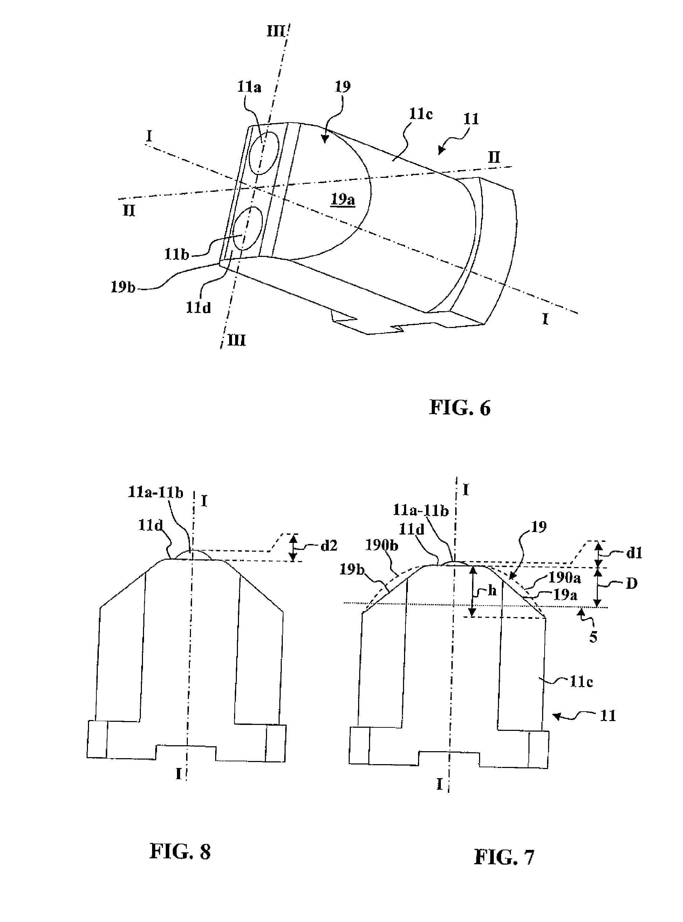

Les moyens d'échappement 19 seront mieux compris à l'aide des figures 6 à 8 sur lesquelles les moyens de connexion électrique 11 comportent un corps de connexion 11 c à face d'extrémité 11 d portant les bornes de contact 11a et 11 b. Les moyens d'échappement 19 comprennent deux rampes 19a et 19b s'étendant l'une à l'écart de l'autre le long d'une direction II-II sensiblement perpendiculaire à la direction longitudinale I-I et sensiblement perpendiculaire à une direction radiale III-III. Comme illustré sur la figure 7, lorsque le corps de connexion 11c est en position de connexion, la face d'extrémité 11d dépasse au-delà de la face proximale d'extrémité 5 (schématisé en ligne discontinue), selon un dépassement D inférieur ou égal à la hauteur h des rampes 19a et 19b. Ainsi, lorsque le corps de connexion 11 c est en position de connexion, les rampes 19a et 19b relient la face d'extrémité 11 d du corps de connexion 11c à la face proximale d'extrémité 5 du corps 3 de pièce à main.

Il est précisé qu'une seule rampe 19a ou 19b pourrait suffire à garantir l'échappement des moyens de connexion électrique 11 hors de la cavité d'indexation 14. Néanmoins, la présence des deux rampes 19a et 19b permet aux moyens de connexion électrique 11 d'échapper hors de la cavité d'indexation 14 quel que soit le sens de rotation relative entre la pièce à main dentaire 1 et le moteur d'entraînement 7 autour de la direction longitudinale I-I.

Sur les figures 6 à 8, les rampes 19a et 19b présentent un profil transversal en ligne droite oblique. Celles-ci peuvent néanmoins présenter un profil transversal différent, par exemple en arc de cercle comme illustré par les lignes discontinues 190a et 190b.

Toujours afin de perturber le moins possible l'opération d'indexation par la présence des moyens de connexion électrique 11 dépassant au-delà de la face proximale d'extrémité 5, on prévoit de façon avantageuse que les premiers moyens élastiques 12 exercent une force de rappel inférieure à la force de rappel exercée par les seconds moyens élastiques 13. L'ergot d'indexation 8a est donc prépondérant pour effectuer l'opération d'indexation, les moyens de connexion électrique 11 opposant une résistance inférieure au praticien lorsqu'il raccorde la pièce à main dentaire 1 au moteur d'entraînement 7 selon la face proximale d'extrémité 5 et la face distale 6.

On voit plus particulièrement sur les figures 6 à 8 que le corps de connexion 11c comporte une section transversale de forme non circulaire. Le corps de connexion 11 c est disposé à coulissement dans un logement de section transversale correspondante. Le corps de connexion 11c ne peut ainsi que coulisser dans son logement, sans pouvoir tourner autour de la direction longitudinale I-I. On évite ainsi tout risque d'inversion des bornes de contact 11a et 11 b lorsqu'elles prélèvent l'énergie électrique. Ceci est important lorsque les moyens électriques d'éclairage 9 exigent une alimentation selon une polarité définie (comme pour une LED par exemple).

Afin de garantir un bon contact des bornes de contact 11a et 11 b avec les moyens d'amenée d'énergie électrique du moteur d'entraînement 7, les bornes de contact 11 a et 11 b sont déplaçables selon la direction longitudinale I-I entre une première position (figure 7) et une seconde position (figure 8). En seconde position (figure 8), la borne de contact dépasse au-delà de la face d'extrémité 11 d du corps de connexion 11c selon un dépassement d2 plus important qu'un dépassement d1 en première position. Des troisièmes moyens élastiques (non visibles) rappellent en permanence les bornes de contact 11a et 11 b en seconde position.

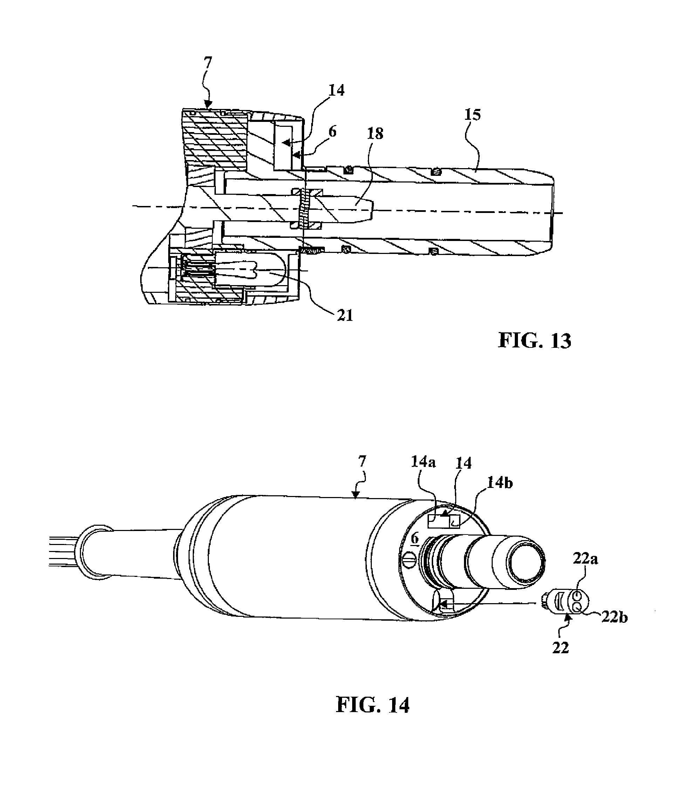

De très nombreux praticiens ont dans leur cabinet un moteur d'entraînement 7 à ampoule à incandescence 21 tel que représenté sur la figure 13. l'ampoule à incandescence 21 est alimentée en énergie électrique pour produire une énergie lumineuse. Un tel moteur d'entraînement est destiné à recevoir une pièce à main dentaire à fibres optiques telle que celle décrite dans le document FR 2 551 651.

Pour éviter au praticien d'avoir à acheter un nouveau moteur d'entraînement, il est avantageux de retirer l'ampoule à incandescence 21 et de la remplacer par un dispositif de raccordement 22, illustré sur la figure 14, en vue de prélever les courants et tensions d'alimentation prévus pour l'ampoule à incandescence 21 afin de les conduire aux moyens de connexion électrique 11 de la pièce à main dentaire 1. Le dispositif de raccordement 22 est compatible électriquement, mécaniquement et géométriquement pour se substituer à l'ampoule à incandescence 21 du moteur d'entraînement 7.

Le dispositif de raccordement 22 peut être du type de ceux décrits dans le document FR 2 673 369. Comme illustré sur les figures 14 à 18, le dispositif de raccordement 22 présente deux bornes d'alimentation 22a et 22b destinées à venir en contact avec les bornes de contact 11 a et 11 b des moyens de connexion électrique 11.

Dans le cas de l'utilisation d'une pièce à main dentaire 1 selon l'invention, à moyens de connexion électrique 11 déplaçables selon la direction longitudinale I-I, il est avantageux que les bornes d'alimentation 22a et 22b soient situées sensiblement au creux d'une face d'extrémité 22c concave du dispositif de raccordement 22. La concavité de la face d'extrémité 22c concave a en effet tendance à amener en correspondance les bornes de contact 11a et 11b avec les bornes d'alimentation 22a et 22b en cas de léger décalage entre le dispositif de raccordement 22 et les moyens de connexion électrique 11.

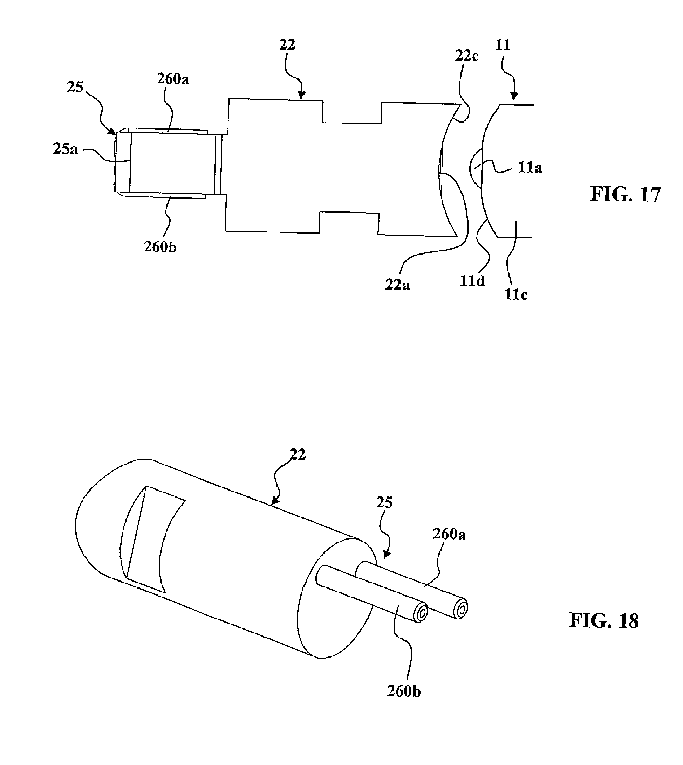

En complément, et comme illustré sur la figure 17, il est avantageux de prévoir que les bornes de contact 11a et 11 b des moyens de connexion électrique 11 sont situées sensiblement au sommet d'une face d'extrémité 11 d convexe. La concavité de la face d'extrémité 22c et la convexité de la face d'extrémité 11 d sont choisies pour coopérer afin de centrer relativement les bornes de contact 11a et 11 b avec les bornes d'alimentation 22a et 22b. Ceci peut être obtenu par le choix de concavité et convexité à rayon de courbure correspondant.

En fonction de la forme de la douille de l'ampoule à incandescence 21, on pourra choisir un dispositif de raccordement 22 présentant une fiche de connexion 25 adaptée.

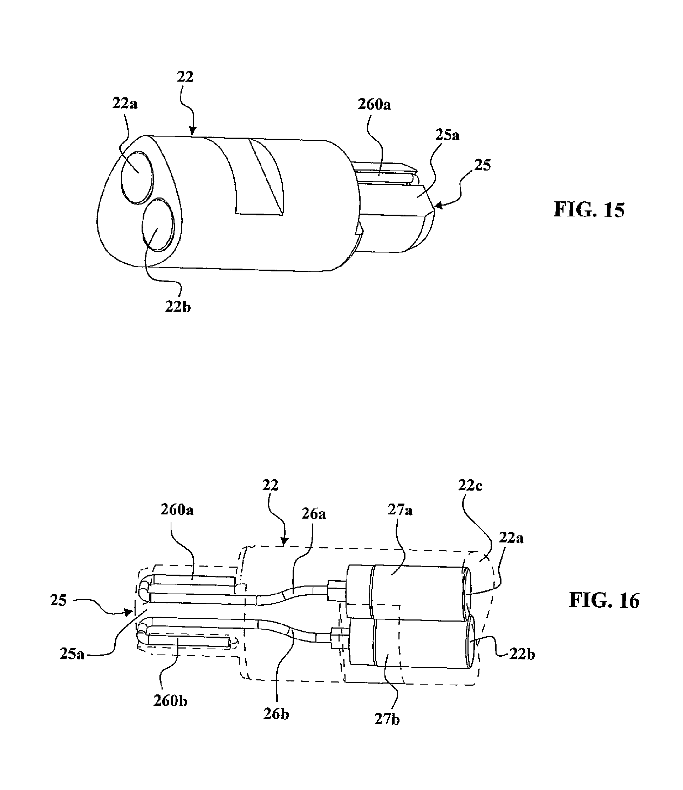

Dans le dispositif de raccordement 22 des figures 15 à 17, la fiche de connexion 25 comporte un plot central 25a en matériau isolant. Deux conducteurs 26a et 26b, respectivement reliés aux bornes d'alimentation 22a et 22b, traversent le dispositif de raccordement 22 et sont rabattus selon leur extrémité libre respective 260a et 260b de part et d'autre du plot central 25a.

Un autre type de fiche de connexion 25 est illustré sur le dispositif de raccordement 22 de la figure 18. Sur cette figure, les extrémités libres 260a et 260b des conducteurs 26a et 26b s'étendent longitudinalement à l'écart du dispositif de raccordement 22 et sont destinées à venir s'enficher respectivement dans deux trous de connexion du moteur d'entraînement 7.

Afin de protéger le praticien et le patient contre les surtensions ou les surintensités, chaque borne d'alimentation 22a et 22b du dispositif de raccordement 22 est connectée en série avec un fusible 27a et 27b (figure 16).

Les polarités de l'alimentation en énergie électrique de l'ampoule à incandescence 21 du moteur d'entraînement 7 sont rarement indiquées, une ampoule à incandescence 21 n'exigeant aucune polarité particulière. On ne sait donc pas quelle sera la polarité de l'énergie électrique prélevée par les bornes de contact 11 a et 11b aux bornes d'alimentation 22a et 22b du dispositif de raccordement 22. Ceci peut mener à un endommagement, voire la destruction, des moyens électriques d'éclairage 9 si ceux-ci exigent une alimentation électrique polarisée (une LED par exemple).

On prévoit donc un circuit de traitement 28 (figure 1) auquel est acheminée par une ligne 10a l'énergie électrique prélevée par les bornes de contact 11a et 11 b. Le circuit électrique de traitement 28 procède à un redressement de la tension, par exemple au moyen d'un pont de redressement à diodes, ce qui permet d'alimenter ensuite les moyens électriques d'éclairage 9 avec une énergie électrique à polarité adaptée.

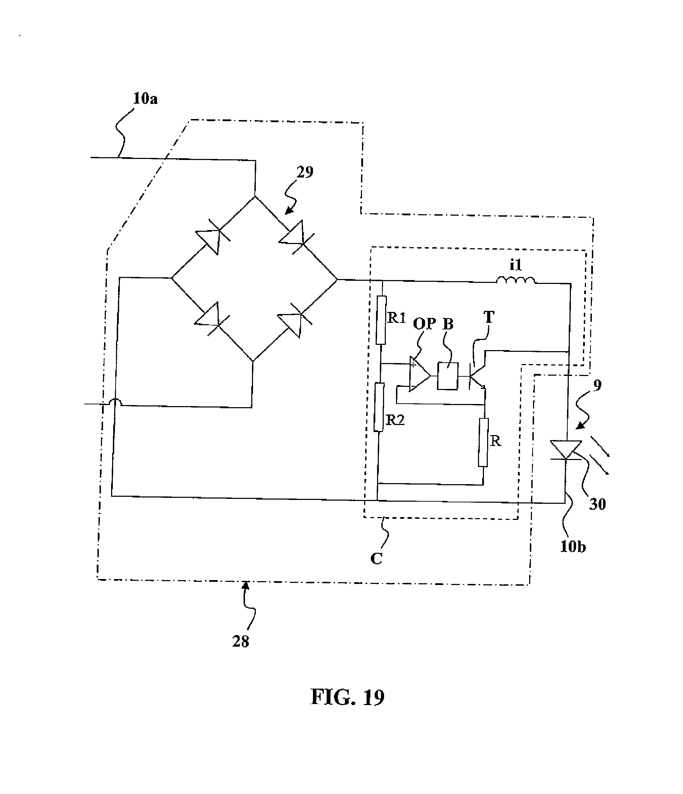

Un exemple de circuit électrique de traitement 28 est illustré sur la figure 19. Sur cette figure, le circuit électrique de traitement 28 comporte un pont de diodes 29 pour procéder au redressement de la tension d'entrée reçue sur la ligne 10a.

Dans le cas de l'utilisation de moyens électriques d'éclairage 9 à LED 30, il est en outre important d'éviter que la LED 30 s'échauffe. Or, l'intensité de l'énergie électrique alimentant une ampoule à incandescence (qui sera prélevée par les moyens de connexion électrique 11) est comprise entre environ 300 mA et environ 350 mA. Une telle intensité est beaucoup trop élevée et risque de provoquer un échauffement trop important de la LED 30 et d'entraîner une réduction importante de sa durée de vie.

Pour résoudre cette difficulté, on peut avantageusement prévoir un circuit C de régulation en intensité, qui permet d'alimenter la LED 30 avec un signal électrique régulé à intensité comprise entre environ 30 mA et environ 100 mA. De préférence, le signal électrique régulé a une intensité d'environ 80 mA.

Un exemple de réalisation de circuit C de régulation en intensité est illustré sur la figure 19. Le circuit C est connecté électriquement entre la sortie du pont de diodes 29 et une ligne de sortie 10b qui alimente la LED 30.

Dans ce mode de réalisation particulier de circuit C, une inductance i1 est connectée en série avec la LED 30 en sortie du pont de diodes 29. Un amplificateur opérationnel OP reçoit sur son entrée non inverseuse une tension de consigne fixée par un pont de résistances R1, R2 connecté en sortie du pont de diodes 29. Un transistor de commutation T est connecté en série avec une résistance R aux bornes de la LED 30, et sa base est commandée par une bascule monostable B déclenchée par le signal de sortie de l'amplificateur opérationnel OP. L'entrée inverseuse de l'amplificateur opérationnel OP est connectée à la connexion entre la résistance R et l'émetteur du transistor de commutation T. Le circuit C régule le courant dans la LED 30 par découpage.

L'intensité du signal électrique alimentant la LED 30 est réglée au moyen de la valeur de l'inductance i1.

L'avantage du circuit électrique de traitement 28 illustré sur la figure 19 est sa grande simplicité, son faible coût, et sa faible consommation.

Le circuit électrique de traitement 28 de la figure 19 permet, grâce à son circuit C de régulation en intensité, de réguler l'intensité de l'énergie électrique provenant de la majeure partie des moteurs d'entraînement à ampoule incandescente qui existent sur le marché, et permet ainsi d'alimenter de manière fiable une pièce à main à LED.

On évite ainsi d'avoir recours à une solution complexe et onéreuse telle que celle décrite dans le document US 2007/0054232 qui utilise une multitude de moyens de détection des caractéristiques de la source lumineuse de la pièce à main et des caractéristiques du signal électrique issu du moteur d'entraînement.

On notera que les moyens de régulation en intensité, comprenant le circuit C, constituent en eux-mêmes une invention indépendante des moyens de connexion électrique 11 décrits précédemment.

La présente invention n'est pas limitée aux modes de réalisation qui ont été explicitement décrits, mais elle en inclut les diverses variantes et généralisations contenues dans le domaine des revendications ci-après.

## Revendications

1. Pièce à main dentaire (1) comprenant :
- une tête (2) apte à entraîner un outil,
- un corps (3) à tronçon proximal (4) s'étendant selon une direction longitudinale (I-I) et destiné à être raccordé selon une face proximale d'extrémité (5) à une face distale (6) d'un moteur d'entraînement (7),
- des moyens d'indexation (8), adaptés pour bloquer en une position angulaire définie le corps (3) de pièce à main dentaire (1) autour de la direction longitudinale (I-I) par rapport au moteur d'entraînement (7),
- des moyens électriques d'éclairage (9) de la zone de travail de l'outil,
- des moyens de transfert (10) d'énergie électrique pour transférer l'énergie électrique depuis la face proximale d'extrémité (5) jusqu'aux moyens électriques d'éclairage (9), comprenant des moyens de connexion électrique (11), **caractérisée en ce que** :
- les moyens d'indexation (8) sont rétractables ou en retrait par rapport à la face proximale d'extrémité (5),
- les moyens de connexion électrique (11), comportant au moins une borne de contact (11a, 11 b), sont déplaçables selon la direction longitudinale (I-I) entre une position de retrait dans laquelle les moyens de connexion électrique (11) ne dépassent pas axialement selon la direction longitudinale (I-I) au-delà de la face proximale d'extrémité (5) du corps (3), et une position de connexion dans laquelle les moyens de connexion électrique (11) dépassent axialement selon la direction longitudinale (I-I) au-delà de la face proximale d'extrémité (5) du corps (3),
- des premiers moyens élastiques (12) rappellent en permanence les moyens de connexion électrique (11) en position de connexion.

2. Pièce à main dentaire (1) selon la revendication 1, **caractérisée en ce que** :
- les moyens d'indexation (8) comprennent une cavité d'indexation (14) portée par la face proximale d'extrémité (5) du corps (3) de pièce à main dentaire (1),
- la cavité d'indexation (14) est destiné à coopérer avec un ergot d'indexation (8a) rétractable, porté par la face distale (6) du moteur d'entraînement (7), déplaçable selon la direction longitudinale (I-I) entre une position d'indexation dans laquelle l'ergot d'indexation (8a) dépasse axialement selon la direction longitudinale (I-I) au-delà de la face distale (6) du moteur d'entraînement (7), et une position de retrait dans laquelle l'ergot d'indexation (8a) ne dépasse pas axialement selon la direction longitudinale (I-I) au-delà de la face distale (6) du moteur d'entraînement (7),
- des seconds moyens élastiques (13) rappellent en permanence l'ergot d'indexation (8a) en position d'indexation.

3. Pièce à main dentaire (1) selon la revendication 1, **caractérisée en ce que** :
- les moyens d'indexation (8) comprennent un ergot d'indexation (8a) rétractable porté par la pièce à main dentaire (1), déplaçable selon la direction longitudinale (I-I) entre une position d'indexation, dans laquelle l'ergot d'indexation (8a) dépasse axialement selon la direction longitudinale (I-I) au-delà de la face proximale d'extrémité (5), et une position de retrait, dans laquelle l'ergot d'indexation (8a) ne dépasse pas axialement selon la direction longitudinale (I-I) au-delà de la face proximale d'extrémité (5),
- des seconds moyens élastiques (13) rappellent en permanence l'ergot d'indexation (8a) en position d'indexation,
- l'ergot d'indexation (8a) est destiné à coopérer avec une cavité d'indexation (14) portée par la face distale (6) du moteur d'entraînement (7).

4. Pièce à main dentaire (1) selon la revendication 3, **caractérisée en ce que** l'ergot d'indexation (8a) et les moyens de connexion électrique (11) ont :
- des positions radiales respectives distinctes à l'écart de l'axe longitudinal (I-I) du tronçon proximal (4) du corps (3) de pièce à main dentaire (1),
et/ou
- des sections transversales de formes respectives distinctes,
et/ou
- des sections transversales avec une ou des dimensions (L1-L6) respectives distinctes,
et/ou
- des orientations respectives relatives distinctes autour de la direction longitudinale,
choisies de telle sorte que les moyens de connexion électrique (11) ne peuvent pas pénétrer dans la cavité d'indexation (14) portée par la face distale (6) du moteur d'entraînement (7) lorsque la pièce à main dentaire (1) et le moteur d'entraînement (7) sont coaxiaux.

5. Pièce à main dentaire (1) selon la revendication 3, **caractérisée en ce que** :
- les moyens de connexion électrique (11) peuvent pénétrer dans la cavité d'indexation (14) portée par la face distale (6) du moteur d'entraînement (7) lorsque la pièce à main dentaire (1) et le moteur d'entraînement (7) sont coaxiaux,
- les moyens de connexion électrique (11) comportent des moyens d'échappement (19) conformés de telle sorte que, lorsque les moyens de connexion électrique (11) ont pénétré dans la cavité d'indexation (14) au lieu et à la place de l'ergot d'indexation (8a), les moyens de connexion électrique (11) peuvent ressortir de la cavité d'indexation (14) lorsque le corps (3) de pièce à main dentaire (1) est déplacé par rapport au moteur d'entraînement (7) selon un mouvement de rotation (20) autour de la direction longitudinale (I-I).

6. Pièce à main dentaire (1) selon la revendication 5, **caractérisée en ce que** :
- les moyens de connexion électrique (11) comportent un corps de connexion (11c) à face d'extrémité (11d) portant ladite au moins une borne de contact (11a, 11b),
- les moyens d'échappement (19) comprennent au moins une rampe (19a, 19b) qui s'étend le long d'une direction (II-II) sensiblement perpendiculaire à la direction longitudinale (I-I) et sensiblement perpendiculaire à une direction radiale (III-III),
- lorsque le corps de connexion (11c) est en position de connexion, la rampe (19a, 19b) relie la face d'extrémité (11 d) du corps de connexion (11c) à la face proximale d'extrémité (5) du corps (3) de pièce à main dentaire (1).

7. Pièce à main dentaire (1) selon la revendication 6, **caractérisée en ce que** les moyens d'échappement (19) comprennent deux rampes (19a, 19b) s'étendant l'une à l'écart de l'autre le long de la direction (II-II) sensiblement perpendiculaire à la direction longitudinale (I-I) et sensiblement perpendiculaire à une direction radiale (III-III).

8. Pièce à main dentaire (1) selon l'une des revendications 6 ou 7, **caractérisée en ce que** la ou les rampes (19a, 19b) présentent un profil transversal sensiblement en arc de cercle (190a, 190b) ou en ligne droite oblique.

9. Pièce à main dentaire (1) selon l'une quelconque des revendications 2 à 8, **caractérisée en ce que** les premiers moyens élastiques (12) exercent une force de rappel inférieure à la force de rappel exercée par les seconds moyens élastiques (13).

10. Pièce à main dentaire (1) selon l'une quelconque des revendications 1 à 9, **caractérisée en ce que** le corps de connexion (11 c) comporte une section transversale de forme non circulaire.

11. Pièce à main dentaire (1) selon l'une quelconque des revendications 1 à 10, **caractérisée en ce que** :
- ladite au moins une borne de contact (11a, 11 b) portée sur la face d'extrémité (11d) du corps de connexion (11c) est déplaçable selon la direction longitudinale (I-I) entre une première position et une seconde position,
- en seconde position, la borne de contact (11a, 11 b) dépasse au-delà de la face d'extrémité (11d) du corps de connexion (11c) selon un dépassement (d2) plus important qu'en première position,
- des troisièmes moyens élastiques rappellent en permanence ladite au moins une borne de contact (11a, 11 b) en seconde position.

12. Kit d'adaptation comportant une pièce à main dentaire (1) selon l'une quelconque des revendications 1 à 11, **caractérisé en ce qu'**il comporte un dispositif de raccordement (22) compatible électriquement, mécaniquement et géométriquement pour se substituer à une ampoule à incandescence (21) portée par le moteur d'entraînement (7), en vue de prélever les courant et tension d'alimentation prévus pour ladite ampoule à incandescence (21) afin de les conduire aux moyens de connexion électrique (11) de ladite pièce à main (1).

13. Kit d'adaptation selon la revendication 12, **caractérisé en ce que** :
- le dispositif de raccordement (22) présente au moins une borne d'alimentation (22a, 22b) destinée à venir en contact avec ladite au moins une borne de contact (11a, 11b) des moyens de connexion électrique (11),
- ladite au moins une borne d'alimentation (22a, 22b) du dispositif de raccordement (22) est située sensiblement au creux d'une face d'extrémité (22c) concave du dispositif de raccordement (22).

14. Kit d'adaptation selon la revendication 13, **caractérisé en ce que** :
- la ou les bornes de contact (11 a, 11 b) des moyens de connexion électrique (11) sont situées sensiblement au sommet d'une face d'extrémité (11d) convexe,
- les concavité et convexité des faces d'extrémité (22c, 11d) du corps de connexion (11) et du dispositif de raccordement (22) sont adaptées pour coopérer afin de centrer relativement les bornes de contact (11a, 11b) avec les bornes d'alimentation (22a, 22b).

15. Kit d'adaptation selon la revendication 14, **caractérisé en ce que** le dispositif de raccordement (22) comporte au moins un fusible (27a, 27b) de protection contre les surtensions ou surintensités.

16. Kit d'adaptation selon la revendication 15, **caractérisé en ce que** chaque borne d'alimentation (22a, 22b) du dispositif de raccordement (22) est connectée en série avec un fusible (27a, 27b).

## Patentansprüche

1. Dentales Handstück (1), umfassend:
- einen Kopf (2), der geeignet ist, ein Werkzeug anzutreiben,
- einen Körper (3) mit einem proximalen Abschnitt (4), der sich in einer longitudinalen Richtung (I-I) erstreckt und dazu vorgesehen ist, über eine proximale Endfläche (5) mit einer distalen Fläche (6) eines Antriebsmotors (7) verbunden zu werden,
- Indizierungsmittel (8), die zum Festsetzten in einer definierten Winkelposition des Körpers (3) des dentalen Handstückes (1) in der longitudinalen Richtung (I-I) relativ zum Antriebsmotor (7) geeignet sind,
- elektrische Leuchtmittel (9) im Arbeitsbereich des Werkzeugs,
- elektrische Energieübertragungsmittel (10) zum Übertragen der elektrischen Energie von der proximalen Endfläche (5) zu den elektrischen Leuchtmitteln (9), die elektrische Verbindungsmittel (11) umfassen,
**dadurch gekennzeichnet, dass**:
- die Indizierungsmittel (8) zurücksetzbar oder zurückgesetzt sind, in Bezug auf die proximale Endfläche (5),
- die elektrischen Verbindungsmittel (11), die wenigstens einen Kontaktanschluss (11a, 11b) umfassen, entlang der longitudinalen Richtung (I-I) verschiebbar sind zwischen einer zurückgesetzten Position, in der sich die elektrischen Verbindungsmittel (11) nicht axial in der longitudinalen Richtung (I-I) hinter die proximale Endfläche (5) des Körpers (3) erstrecken, und einer Verbindungsposition, in der sich die elektrischen Verbindungsmittel (11) axial in der longitudinalen Richtung (I-I) hinter die proximale Endfläche (5) des Körpers (3) erstrecken,
- erste elastische Mittel (12) ständig die elektrischen Verbindungsmittel (11) zurück in die Verbindungsposition stellen.

2. Dentales Handstück (1) nach Anspruch 1, **dadurch gekennzeichnet, dass**:
- die Indizierungsmittel (8) eine Indizierungsausnehmung (14), die durch die proximale Endfläche (5) des Körpers (3) des dentalen Handstücks (1) getragen ist,
- wobei die Indizierungsausnehmung (14) dazu vorgesehen ist, mit einem durch die distale Fläche (6) des Antriebsmotors (7) getragenen zurücksetzbaren Indizierungszapfen (8a) zusammen zu wirken, der in der longitudinalen Richtung (I-I) zwischen einer Indizierungsposition, in der der Indizierungszapfen (8a) axial in der longitudinalen Richtung (I-I) hinter der distalen Fläche (6) des Antriebsmotors (7) erstreckt, und einer zurückgesetzten Position, in der sich der Indizierungszapfen (8a) nicht axial in der longitudinalen Richtung (I-I) hinter der distalen Fläche (6) des Antriebsmotors (7) erstreckt, verschiebbar ist,
- zweite elastische Mittel (13) ständig den Indizierungszapfen (8a) zurück in die Indizierungsposition stellen.

3. Dentales Handstück (1) nach Anspruch 1, **dadurch gekennzeichnet, dass**:
- die Indizierungsmittel (8) einen durch das dentale Handstück (1) getragenen zurücksetzbaren Indizierungszapfen (8a) umfassen, der in der longitudinalen Richtung (I-I) zwischen einer Indizierungsposition, in der der sich Indizierungszapfen (8a) axial in der longitudinalen Richtung (I-I) hinter der proximalen Endfläche (5) erstreckt, und einer zurückgesetzten Position, in der sich der Indizierungszapfen (8a) nicht axial in der longitudinalen Richtung (I-I) hinter der proximalen Endfläche (5) erstreckt, verschiebbar ist,
- zweite elastische Mittel (13) ständig den Indizierungszapfen (8a) zurück in die Indizierungsposition stellen,
- wobei der Indizierungszapfen (8a) vorgesehen ist, mit einer Indizierungsausnehmung (14) zusammenzuwirken, die durch die distale Fläche (6) des Antriebsmotors (7) getragen ist.

4. Dentales Handstück (1) nach Anspruch 3, **dadurch gekennzeichnet, dass** der Indizierungszapfen (8a) und die elektrischen Anschlussmittel (11) besitzen:
- entsprechende individuelle radiale Positionen entfernt von der longitudinalen Achse (I-I) des proximalen Abschnitts (4) des Körpers (3) des dentalen Handstückes (1),
und/oder
- transversale Abschnitte entsprechender individueller Formen,
und/oder
- transversale Abschnitte mit einer oder mehrerer entsprechender individueller Ausdehnungen (L1-L6),
und/oder
- entsprechende relative individuelle Orientierungen in der longitudinalen Richtung,
die derart gewählt sind, dass die elektrischen Verbindungsmittel (11) nicht in die durch die distale Fläche (6) des Antriebsmotors (7) getragene Indizierungsausnehmung (14) eindringen können,
wenn das dentale Handstück (1) und der Antriebsmotor (7) koaxial sind.

5. Dentales Handstück (1) nach Anspruch 3, **dadurch gekennzeichnet, dass**:
- die elektrischen Anschlussmittel (11) in die durch die distale Fläche (6) des Antriebsmotors (7) getragene Indizierungsausnehmung (14) eindringen können, wenn das dentale Handstück (1) und der Antriebsmotor (7) koaxial sind,
- die elektrischen Anschlussmittel (11) Lösemittel (19) enthalten, die derart eingestellt sind, dass wenn statt des Indizierungszapfens (8a) die elektrischen Anschlussmittel (11) in die Indizierungsausnehmung (14) eingedrungen sind, die elektrischen Anschlussmittel (11) die Indizierungsausnehmung (14) verlassen können, wenn der Körper (3) des dentalen Handstückes (1) relativ zum Antriebsmotor (7) durch eine Drehbewegung (20) über die longitudinale Richtung (I-I) verschoben wird.

6. Dentales Handstück (1) nach Anspruch 5, **dadurch gekennzeichnet, dass**:
- die elektrischen Anschlussmittel (11) einen Verbindungskörper (11c) enthalten, der eine Endfläche (11d) besitzt, die den genannten wenigstens einen Kontaktanschluss (11a, 11b) lagert,
- die Lösemittel (19) wenigstens eine Rampe (19a, 19b) umfassen, die sich entlang einer Richtung (II-II) im Wesentlichen rechtwinklig zur longitudinalen Richtung (I-I) und im Wesentlichen rechtwinklig zu einer radialen Richtung (III-III) erstreckt,
- wenn der Verbindungskörper (11c) in der Anschlussposition ist, die Rampe (19a, 19b) die Endfläche (11d) des Anschlusskörpers (11c) mit der proximalen Endfläche (5) des Körpers (3) des dentalen Handstücks (1) verbindet.

7. Dentales Handstück (1) nach Anspruch 6, **dadurch gekennzeichnet, dass** die Lösemittel (19) zwei Rampen (19a, 19b) umfassen, die sich voneinander entfernt entlang der Richtung (II-II) im Wesentlichen rechtwinklig zur longitudinalen Richtung (I-I) und im Wesentlichen rechtwinklig zu einer radialen Richtung (III-III) erstreckt.

8. Dentales Handstück (1) nach einem der Ansprüche 6 oder 7, **dadurch gekennzeichnet, dass** die Rampe oder die Rampen (19a, 19b) ein transversales Profil im Wesentlichen in der Form eines kreisförmigen Bogens (190a, 190b) oder in der Form einer schrägen geraden Linie besitzen.

9. Dentales Handstück (1) nach einem der Ansprüche 2 bis 8, **dadurch gekennzeichnet, dass** die ersten elastischen Mittel (12) eine Rückstellkraft ausüben, die kleiner ist, als die Rückstellkraft, die durch die zweiten elastischen Mittel (13) ausgeübt wird.

10. Dentales Handstück (1) nach einem der Ansprüche 1 bis 9, **dadurch gekennzeichnet, dass** der Anschlusskörper (11c) einen Querschnitt mit einer nicht-kreisförmigen Form besitzt.

11. Dentales Handstück (1) nach einem der Ansprüche 1 bis 10, **dadurch gekennzeichnet, dass**:
- der genannte wenigstens eine Kontaktanschluss (11a, 11b), der an der Endfläche (11d) des Verbindungskörpers (11c) in der longitudinalen Richtung (I-I) zwischen einer ersten Position und einer zweiten Position verschoben werden kann,
- in der zweiten Position sich der Kontaktanschluss (11a, 11b) hinter die Endfläche (11d) des Verbindungskörpers (11c) durch eine Verlängerung (d2) erstreckt, die größer ist, als in der ersten Position,
- dritte elastische Mittel, die ständig den genannten wenigstens einen Kontaktanschluss (11a, 11b) in die zweite Position zurückstellen.

12. Anpassungsbausatz umfassend ein dentales Handstück (1) nach einem der Ansprüche 1 bis 11, **dadurch gekennzeichnet, dass** es eine elektrisch, mechanisch und geometrisch kompatible Koppelvorrichtung (22) umfasst, die eine durch den Antriebsmotor (7) getragene strahlende Lampe (21) ersetzt, zum Zwecke der Entnahme des für die genannte strahlende Lampe (21) vorgesehenen Versorgungsstromes und -spannung, um sie an die elektrischen Verbindungsmittel (11) des genannten Handstücks (1) zu leiten.

13. Anpassungsbausatz nach Anspruch 12, **dadurch gekennzeichnet, dass**:
- die Koppelvorrichtung (22) wenigstens einen Versorgungsanschluss (22a, 22b) aufweist, der dazu vorgesehen ist, mit dem genannten wenigsten einen Kontaktanschluss (11a, 11b) der genannten elektrischen Verbindungsmittel (11) in Kontakt zu kommen,
- wobei der genannte wenigstens eine Versorgungsanschluss (22a, 22b) der Koppelvorrichtung (22) im Wesentlichen in einer Vertiefung einer konkaven Endfläche (22c) der Koppelvorrichtung (22) angeordnet ist.

14. Anpassungsbausatz nach Anspruch 13, **dadurch gekennzeichnet, dass**:
- der oder die Kontaktanschlüsse (11a, 11b) der elektrischen Verbindungsmittel (11) im Wesentlichen auf einer Spitze einer konvexen Endfläche (11d) angeordnet sind,
- wobei die konkave und konvexe Endfläche (22c, 11d) des Verbindungskörpers (11) und der Koppelvorrichtung (22) eingerichtet sind, zusammen zu wirken, um die Kontaktanschlüsse (11a, 11b) relativ zu den Versorgungsanschlüssen (22a, 22b) zu zentrieren.

15. Anpassungsbausatz nach Anspruch 14, **dadurch gekennzeichnet, dass** die Koppelvorrichtung (22) wenigstens eine Sicherung (27a, 27b) umfasst, zum Schutz gegen die Überspannung und Überstrom.

16. Anpassungsbausatz nach Anspruch 15, **dadurch gekennzeichnet, dass** jeder der Versorgungsanschlüsse (22a, 22b) der Koppelvorrichtung (22) in Reihe mit einer Sicherung (27a, 27b) verbunden sind.

## Claims

1. Dental handpiece (1) comprising:
- a head (2) suitable for driving a tool,
- a body (3) with proximal section (4) extending in a longitudinal direction (I-I) and intended to be connected by a proximal end face (5) to a distal face (6) of a drive motor (7),
- indexing means (8), suitable for immobilizing the body (3) of the dental handpiece (1) in a defined angular position about the longitudinal direction (I-I) relative to the drive motor (7),
- electric means (9) for lighting the working area of the tool,
- electrical energy transfer means (10) for transferring the electrical energy from the proximal end face (5) to the electric lighting means (9), comprising electrical connection means (11),
**characterized in that**:
- the indexing means (8) are retractable or set back relative to the proximal end face (5),
- the electrical connection means (11), comprising at least one contact terminal (11a, 11b), can be displaced in the longitudinal direction (I-I) between a retracted position in which the electrical connection means (11) do not extend axially in the longitudinal direction (I-I) beyond the proximal end face (5) of the body (3), and a connection position in which the electrical connection means (11) extend axially in the longitudinal direction (I-I) beyond the proximal end face (5) of the body (3),
- first elastic means (12) permanently return the electrical connection means (11) to the connection position.

2. Dental handpiece (1) as claimed in claim 1, **characterized in that**:
- the indexing means (8) comprise an indexing cavity (14) borne by the proximal end face (5) of the body (3) of the dental handpiece (1),
- the indexing cavity (14) is intended to cooperate with a retractable indexing snug (8a), borne by the distal face (6) of the drive motor (7), which can be displaced in the longitudinal direction (I-I) between an indexing position in which the indexing snug (8a) extends axially in the longitudinal direction (I-I) beyond the distal face (6) of the drive motor (7), and a retracted position in which the indexing snug (8a) does not extend axially in the longitudinal direction (I-I) beyond the distal face (6) of the drive motor (7),
- second elastic means (13) permanently return the indexing snug (8a) to the indexing position.

3. Dental handpiece (1) as claimed in claim 1, **characterized in that**:
- the indexing means (8) comprise a retractable indexing snug (8a) borne by the dental handpiece (1), that can be displaced in the longitudinal direction (I-I) between an indexing position, in which the indexing snug (8a) extends axially in the longitudinal direction (I-I) beyond the proximal end face (5), and a retracted position, in which the indexing snug (8a) does not extend axially in the longitudinal direction (I-I) beyond the proximal end face (5),
- second elastic means (13) permanently return the indexing snug (8a) to the indexing position,
- the indexing snug (8a) is intended to cooperate with an indexing cavity (14) borne by the distal face (6) of the drive motor (7).

4. Dental handpiece (1) as claimed in claim 3, **characterized in that** the indexing snug (8a) and the electrical connection means (11) have:
- distinct respective radial positions away from the longitudinal axis (I-I) of the proximal section (4) of the body (3) of the dental handpiece (1),
and/or
- transversal sections of distinct respective forms,
and/or
- transversal sections with one or more distinct respective dimensions (L1-L6),
and/or
- distinct relative respective orientations about the longitudinal direction,
chosen such that the electrical connection means (11) cannot penetrate into the indexing cavity (14) borne by the distal face (6) of the drive motor (7) when the dental handpiece (1) and the drive motor (7) are coaxial.

5. Dental handpiece (1) as claimed in claim 3, **characterized in that**:
- the electrical connection means (11) can penetrate into the indexing cavity (14) borne by the distal face (6) of the drive motor (7) when the dental handpiece (1) and the drive motor (7) are coaxial,
- the electrical connection means (11) include escape means (19) configured so that, when the electrical connection means (11) have penetrated into the indexing cavity (14) instead of the indexing snug (8a), the electrical connection means (11) can leave the indexing cavity (14) when the body (3) of the dental handpiece (1) is displaced relative to the drive motor (7) by a rotational movement (20) about the longitudinal direction (I-I).

6. Dental handpiece (1) as claimed in claim 5, **characterized in that**:
- the electrical connection means (11) include a connection body (11c) having an end face (lid) bearing said at least one contact terminal (11a, 11b),
- the escape means (19) comprise at least one ramp (19a, 19b) which extends along a direction (II-II) substantially perpendicular to the longitudinal direction (I-I) and substantially perpendicular to a radial direction (III-III),
- when the connection body (11c) is in the connection position, the ramp (19a, 19b) links the end face (lid) of the connection body (11c) to the proximal end face (5) of the body (3) of the dental handpiece (1).

7. Dental handpiece (1) as claimed in claim 6, **characterized in that** the escape means (19) comprise two ramps (19a, 19b) extending away from one another along the direction (II-II) substantially perpendicular to the longitudinal direction (I-I) and substantially perpendicular to a radial direction (III-III).

8. Dental handpiece (1) as claimed in one of claims 6 or 7, **characterized in that** the ramp or ramps (19a, 19b) have a transversal profile substantially in the form of a circular arc (190a, 190b) or in the form of an oblique straight line.

9. Dental handpiece (1) as claimed in any one of claims 2 to 8, **characterized in that** the first elastic means (12) exert a return force less than the return force exerted by the second elastic means (13).

10. Dental handpiece (1) as claimed in any one of claims 1 to 9, **characterized in that** the connection body (11c) includes a transversal section of non-circular form.

11. Dental handpiece (1) as claimed in any one of claims 1 to 10, **characterized in that**:
- said at least one contact terminal (11a, 11b) borne on the end face (11d) of the connection body (11c) can be displaced in the longitudinal direction (I-I) between a first position and a second position,
- in the second position, the contact terminal (11a, 11b) extends beyond the end face (11d) of the connection body (11c) by an extension (d2) that is greater than in the first position,
- third elastic means permanently return said at least one contact terminal (11a, 11b) to the second position.

12. Adaptation kit comprising a dental handpiece (1) as claimed in any one of claims 1 to 11, **characterized in that** it comprises an electrically-, mechanically- and geometrically-compatible coupling device (22) to replace an incandescent lamp (21) borne by the drive motor (7), with a view to tapping the power supply current and voltage provided for said incandescent lamp (21) in order to conduct them to the electrical connection means (11) of said handpiece (1).

13. Adaptation kit as claimed in claim 12, **characterized in that**:
- the coupling device (22) has at least one power supply terminal (22a, 22b) intended to come into contact with said at least one contact terminal (11a, 11b) of the electrical connection means (11),
- said at least one power supply terminal (22a, 22b) of the coupling device (22) is situated substantially in the hollow of a concave end face (22c) of the coupling device (22).

14. Adaptation kit as claimed in claim 13, **characterized in that**:
- the contact terminal or terminals (11a, 11b) of the electrical connection means (11) are situated substantially at the summit of a convex end face (lid),
- the concavity and convexity of the end faces (22c, 11d) of the connection body (11) and of the coupling device (22) are adapted to cooperate in order to relatively center the contact terminals (11a, 11b) with the power supply terminals (22a, 22b).

15. Adaptation kit as claimed in claim 14, **characterized in that** the coupling device (22) includes at least one fuse (27a, 27b) for protection against overvoltages or overcurrents.

16. Adaptation kit as claimed in claim 15, **characterized in that** each power supply terminal (22a, 22b) of the coupling device (22) is connected in series with a fuse (27a, 27b).
